(19) Europäisches Patentamt
European Patent Office
Office européen des brevets

(11) **EP 3 034 689 B1**

(12) **EUROPÄISCHE PATENTSCHRIFT**

(45) Veröffentlichungstag und Bekanntmachung des Hinweises auf die Patenterteilung:
**15.11.2017 Patentblatt 2017/46**

(51) Int Cl.:
***D07B 1/06*** *(2006.01)* ***B60C 9/00*** *(2006.01)*

(21) Anmeldenummer: **15186364.4**

(22) Anmeldetag: **23.09.2015**

(54) **STAHLKORD ALS FESTIGKEITSTRÄGER IN EINER GÜRTELLAGE EINES FAHRZEUGLUFTREIFENS UND SEINE VERWENDUNG**

STEEL CORD AS A REINFORCING SUPPORT IN A BELT PLY OF A PNEUMATIC TYRE FOR AND ITS USE

CABLE D'ACIER EN TANT QUE SUPPORT DE FIXATION DANS UN BANDAGE D'UN PNEU DE VEHICULE AUTOMOBILE ET SON UTILISATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **16.12.2014 DE 102014226116**

(43) Veröffentlichungstag der Anmeldung:
**22.06.2016 Patentblatt 2016/25**

(73) Patentinhaber: **Continental Reifen Deutschland GmbH**
**30165 Hannover (DE)**

(72) Erfinder:
 • **Fries, Volkmar**
 **30900 Wedemark (DE)**
 • **Billing, Hans-Martin**
 **30161 Hannover (DE)**
 • **Gehlauf, Matthias**
 **31319 Sehnde (DE)**
 • **Metge, Axel**
 **30179 Hannover (DE)**
 • **Binder, Axel**
 **30161 Hannover (DE)**

(74) Vertreter: **Finger, Karsten**
**Continental Aktiengesellschaft**
**Patente und Lizenzen**
**Postfach 169**
**30001 Hannover (DE)**

(56) Entgegenhaltungen:
BE-A- 654 921    DE-A1-102010 036 809
DE-U1- 8 004 636    JP-A- 2001 354 006
JP-A- 2012 076 672

EP 3 034 689 B1

**Beschreibung**

Die Erfindung betrifft einen Stahlkord der Konstruktion 1+4 zur Verwendung als Festigkeitsträger in einer Gürtellage eines Fahrzeugluftreifens, mit einem einzigen Kernfilament und mit Lagenfilamenten, welche sämtlich das Kernfilament außen berühren und gleiche Durchmesser von 0,38 mm bis 0,45 mm aufweisen.

An die Gürtelkorde in den Gürtellagen von Fahrzeugluftreifen werden hohe Anforderungen gestellt, die in engem Zusammenhang mit bestimmten Eigenschaften der Gürtelkorde - der Stahlkorde in den Gürtellagen - stehen. Zu den Anforderungen an Gürtelkorde zählen eine ausreichend hohe Zug- und Biegesteifigkeit, eine hohe Festigkeit, gute Ermüdungsbeständigkeit, gute Korrosionsbeständigkeit, Stabilität gegen Verschiebung der einzelnen Kordbestandteile, eine gute Haftung zur umgebenden Gummimischung und moderate Herstellkosten. Zielkonflikte bestehen nun vor allem zwischen der Abrieblebensdauer, der Gürtelkantenhaltbarkeit, der Gürtelrobustheit und auch der Herstellkosten des Gürtelpakets aus einer Anzahl von Gürtellagen.

Die durch den Laufstreifenabrieb bestimmte Lebensdauer eines Fahrzeugluftreifens, die sogenannte Abrieblebensdauer, wird maßgeblich von den Gürtelkorden beeinflusst. So hat eine höhere Steifigkeit der Gürtellagen und damit auch des gesamten Gürtelpaketes eine höhere Abrieblebensdauer zur Folge. Die Abrieblebensdauer kann durch die Verwendung steiferer Stahlkorde in den Gürtellagen und/oder die Anordnung der Stahlkorde in einer höheren Korddichte positiv beeinflusst werden. Hinsichtlich der Gürtelkantenhaltbarkeit hat ein größerer, lichter Abstand zwischen den einzelnen Stahlkorden, insbesondere in den sogenannten Arbeitslagen eines Gürtelpakets eines Nutzfahrzeugreifens, eine Verbesserung zur Folge. Für die Gürtelhaltbarkeit ist es vorteilhaft, Stahlkorde mit einem größeren Korddurchmesser zu wählen und mit einer niedrigeren Korddichte und damit einem größeren, lichten Kordabstand einzusetzen. Eine größere Festigkeit der Stahlkorde sowie ein eher geringer gegenseitiger Abstand der Stahlkorde in den Gürtellagen begünstigt die Robustheit des Gürtelpakets und schützt dieses vor äußeren Beschädigungen.

Ein möglichst kompakter Aufbau der Stahlkorde wiederum ist vorteilhaft für die Erzielung einer hohen Kordsteifigkeit in Relation zu den Kosten. Eine hohe Steifigkeit der Stahlkorde und größere Kordabstände verringern daher die Kosten. Stahlkordkonstruktionen mit höherem Korddurchmesser bei gleicher Steifigkeit erweisen sich bei gleichbleibender Korddichte in den Gürtellagen als nachteilig hinsichtlich der Gürtelhaltbarkeit und verursachen höhere Kosten wegen der größeren Dicke der Gürtellagen und des damit einhergehenden größeren Volumens der Gummierung.

Stahlkorde der eingangs genannten Art sind in unterschiedlichen Ausführungsformen aus dem Stand der Technik bekannt. So ist beispielsweise ein Nutzfahrzeugreifen bekannt, in dessen Gürtellagen ein Stahlkord der Konstruktion 1+6×0,34 enthalten ist. Die sechs Lagenfilamente sind vorverformt, sie würden ohne Vorverformung vollständig oder nahezu vollständig das Kernfilament umhüllen, sodass eine Penetration von Gummimaterial in die Filamentzwischenräume kaum mehr möglich wäre. Durch die Vorverformung der Lagenfilamente ist der Stahlkord insgesamt weniger kompakt und weist einen größeren Außendurchmesser auf, wodurch bei einer gewissen Korddichte die lichten Kordabstände verringert sind, was für die Gürtelhaltbarkeit von Nachteil ist. Diese bekannte Stahlkordkonstruktion erfordert eine gewisse Dicke der Gürtellagen und damit ein größeres Volumen an Gummierungsmischung, wodurch sich die Kosten erhöhen.

Aus der DE 10 2010 036 809 A ist ein Stahlkord der der eingangs genannten Art der Konstruktion 1+N mit N > 3 bekannt, dessen Kernfilament einen Durchmesser von 0,30 mm bis 0,45 mm und dessen Lagenfilamente einen Durchmesser von 0,35 mm bis 0,50 mm aufweisen können. Die bevorzugte Konstruktion ist ein Stahlkord 1+5. Die aus diesem Stand der Technik bekannten Stahlkorde sind vor allem in Gürtellagen von Fahrzeugluftreifen vorteilhaft einsetzbar, die für höhere Lasten ausgelegt sind, also insbesondere LKW-Reifen und Busreifen.

Die JP 2012 076 672 A offenbart einen Stahlkord der Konstruktion 1+N mit N = 3 bis 9, wobei das Kernfilament und die Lagenfilamente Durchmesser von 0,20 mm bis 0,40 mm aufweisen und der Durchmesser des Kernfilamentes mit jenem der Lagenfilamente übereinstimmen kann. Die bevorzugte Konstruktion ist 1 x 0,32 + 5 x 0,37. In der BE 654 921 A sind nicht offene Stahlkorde der Konstruktion 0,20 + 4 x 0,48 mm und 0,15 + 4 x 0,37 mm offenbart.

Aus der DE 30 06 488 A1 ist ein Stahlkord bekannt, welcher bei einer Verwendung in Gürtellagen von Fahrzeugluftreifen für Personenkraftwagen ein Kernfilament mit einem Durchmesser von 0,138 mm oder 0,15 mm und Lagenfilamente mit Durchmessern von 0,23 mm oder 0,25 mm aufweist. Für eine Verwendung dieses Stahlkordes in Gürtellagen von Nutzfahrzeugreifen soll der Durchmesser des Kernfilamentes zwischen 0,18 mm und 0,21 mm und jener der Lagenfilamente zwischen 0,30 mm und 0,35 mm betragen. Die Lagenfilamente sollen aus einem Kohlenstoffstahldraht mit einer Zugfestigkeit von mindestens 2250 bis 1130 log(d) N/mm$^2$ bestehen, wobei d der Drahtdurchmesser in Millimeter ist, das Kernfilament soll aus einem Kohlenstoffstahldraht mit einer Zugfestigkeit von weniger als 2250 bis 1130 log(d) N/mm$^2$ bestehen.

Eine weitere zweilagige Stahlkordkonstruktion ist aus der JP 60-038208 A bekannt. Offenbart ist eine 1+5-Kordkonstruktion mit einem maximalen Filamentdurchmesser von 0,342 mm. Um eine ausreichende Zugsteifigkeit der Gürtellagen, insbesondere in Nutzfahrzeugreifen, sicherzustellen, müssten diese Stahlkorde mit einer relativ hohen Korddichte angeordnet werden, was jedoch, wie oben erwähnt, für die Gürtelkantenhaltbarkeit von Nachteil ist.

Darüber hinaus sind auch mehrlagige Stahlkordkonstruktionen mit zwei oder mehreren Filamenten in unterschiedlichen Ausführungsformen bekannt. Die meisten der als Gürtelkorde verwendbaren bekannten Konstruktionen weisen Querschnittsflächen auf, die größer als 0,5 mm$^2$ sind, und sind Zwei- oder Drei-Lagen-Korde mit zwei oder vier Kernfilamenten. Abgesehen von der aufwendigen Kordherstellung, die mit höheren Kosten verbunden ist, weisen solche Gürtelkorde meist eine relativ geringe Kompaktheit und eine geringe Steifigkeit bei gegebenem Korddurchmesser auf. Dadurch ist die Abrieblebensdauer beeinträchtigt, die ja auch in Konflikt mit der Gürtelkantenhaltbarkeit steht.

Die eingangs erwähnten Anforderungen an Stahlkorde für Gürtellagen stehen somit auch in einem erheblichen Ausmaß in Zusammenhang mit dem Einsatz der Stahlkorde, insbesondere bei welchem Reifentyp - ob PKW-, LKW-Reifen oder dergleichen - ein Einsatz erfolgt und welchen speziellen Belastungen diese Reifen im Betrieb ausgesetzt werden.

Der Erfindung liegt daher die Aufgabe zugrunde, einen Stahlkord der eingangs genannten Art, welcher für einen Einsatz als Gürtelkord in Gürtellagen von Nutzfahrzeugreifen radialer Bauart, wie Transporterreifen oder Light-Truckreifen, LKW-Reifen und Busreifen, besonders gut geeignet ist, zur Verfügung zu stellen. Der Stahlkord soll hinsichtlich der oben erwähnten Zielkonflikte zwischen Abrieblebensdauer, Gürtelkantenhaltbarkeit, Gürtelrobustheit und Herstellkosten optimiert sein bzw. in der Lage sein, diese Zielkonflikte wesentlich besser zu lösen als die bekannten Konstruktionen.

Gelöst wird die gestellte Aufgabe erfindungsgemäß dadurch, dass das Kernfilament einen Durchmesser von 0,22 mm bis 0,25 mm aufweist.

Bei einem erfindungsgemäß ausgeführten Stahlkord können die Durchmesser des Kernfilamentes und der Lagenfilamente derart aufeinander abgestimmt werden, dass eine gute Penetration des Gummimaterials der Gürtelgummierung in die Zwischenräume zwischen den Lagenfilamenten gewährleistet ist, sodass das Kernfilament gegen Verschieben gut fixiert ist. Stahlkorde gemäß der Erfindung weisen ferner Korddurchmesser auf, die es gestatten, die Stahlkorde in den Gürtellagen unter gegenseitigen Abständen anzuordnen, die für die Gürtelkantenhaltbarkeit und die Gürtelhaltbarkeit besonders vorteilhaft sind.

Bei einer bevorzugten Ausführungsform der Erfindung werden die Durchmesser des Kernfilamentes und der Lagenfilamente aufeinander derart abgestimmt, dass der Korddurchmesser zwischen 0,98 mm und 1,1 mm beträgt bzw. derart, dass der Durchmesser des Kernfilamentes 57,5 % bis 67,5 %, insbesondere 62,5 %, des Durchmessers der Lagenfilamente beträgt. Diese Auslegung ist für eine hohe Festigkeit, Widerstandsfähigkeit und Ermüdungsbeständigkeit des Stahlkordes besonders günstig.

Besonders bevorzugt ist eine Kordkonstruktion, bei der der Durchmesser des Kernfilamentes des erfindungsgemäßen Stahlkordes 0,25 mm und bei der der Durchmesser der Lagenfilamente 0,40 mm beträgt. Korde dieser Konstruktion haben sich zur Lösung des Zielkonfliktes zwischen der Abrieblebensdauer, der Gürtelkantenhaltbarkeit, der Gürtelrobustheit und der Herstellkosten des Gürtelpakets als besonders geeignet herausgestellt.

Für eine gute Fixierung des Kernfilamentes ist es von Bedeutung, eine bestimmte Offenheit zwischen den Lagenfilamenten zu gewährleisten, um eine gute Penetration von Gummimaterial in die Zwischenräume zwischen den Lagenfilamenten sicherzustellen. Die Offenheit O der äußeren Filamente wird gemäß der Beziehung

$$O\,[\%] = N \times A_{NM} / \pi \times D_0$$

ermittelt, wobei $A_{NM}$ der arithmetische Mittelwert der kleinsten gegenseitigen Abstände der Lagenfilamente und $D_0$ der Durchmesser jenes Kreises ist, in welchem die kleinsten gegenseitigen Abstände zwischen den Lagenfilamenten Sehnen bilden. Der Durchmesser dieses Kreises wird gemäß der Beziehung

$$D_0 = (D_1 + D_2) \times \cos(360°/8)$$

ermittelt.

Die erwähnten vorteilhaften Eigenschaften erfindungsgemäßer Stahlkorde lassen sich vor allem mit einem Stahl bestimmter Zugfestigkeit erreichen. Die Zugfestigkeit sollte mindestens 2800 N/mm$^2$ betragen. Bevorzugt wird daher ein High-Tensile oder Super-Tensile Stahl zur Herstellung der Stahlfilamente erfindungsgemäßer Stahlkorde verwendet. Eine gewisse Bedeutung für die Festigkeit erfindungsgemäßer Stahlkorde hat auch die Länge der Verdrillung der Lagenfilamente, diese sollte von 10 mm bis 25 mm, vorzugsweise in der Größenordnung von 17, 5 mm betragen.

Wie eingangs erwähnt eignen sich erfindungsgemäß ausgeführte Stahlkorde vor allem zur Verwendung als Gürtelkord in der Gürtellage von Fahrzeugluftreifen radialer Bauart.

So können erfindungsgemäße Stahlkorde als Gürtelkord in zumindest einer Gürtellage eines Reifens mit C-Kennzeichnung, also insbesondere eines Transporterreifens, eines Light-Truck-Reifens oder eines Reifens für SUVs, eingesetzt werden. In diesem Reifensegment zeigt die Verwendung erfindungsgemäßer Stahlkorde in den Gürtellagen eine gute Ausgewogenheit zwischen der Abrieblebensdauer, der Gürtelhaltbarkeit und der Gürtelrobustheit. Bevorzugt ist eine Verwendung der Stahlkorde in den Gürtellagen dieser Reifen mit einer Fadendichte von 34 epdm bis 55 epdm, insbesondere 40 epdm bis 50 epdm.

Eine weitere, erfindungsgemäße Verwendung des Stahlkordes ist als Gürtelkord in zumindest einer Gürtellage eines LKW- oder Busreifens. Die Gürtellagen von Reifen dieses Segments weisen üblicherweise zumindest eine Sperrgürtellage, zumindest zwei Arbeitsgürtellagen und optional zumindest eine Schutzgürtellage auf.

Bei einem Einsatz des erfindungsgemäßen Stahlkordes in einer Sperrgürtellage ist die hohe Steifigkeit, der günstige Einfluss auf die Abrieblebensdauer sowie auf den Rollwiderstand von Bedeutung, ferner die hohe Festigkeit und Ermüdungsbeständigkeit erfindungsgemäßer Stahlkorde. Die Anordnung erfindungsgemäßer Stahlkorde in einer Sperrgürtellage erfolgt mit einer Fadendichte von 40 epdm bis 70 epdm, insbesondere von 50 epdm bis 65 epdm.

Bei einer Verwendung des erfindungsgemäßen Stahlkordes in zumindest einer Arbeitsgürtellage ist der vorteilhafte Einfluss des Stahlkordes auf die Abrieblebensdauer, die Gürtelhaltbarkeit und die Gürtelrobustheit von vorrangiger Bedeutung. Erfindungsgemäße Stahlkorde werden in Arbeitsgürtellagen mit Fadendichten von 40 epdm bis 60 epdm, insbesondere 45 epdm bis 55 epdm, verwendet.

Auch eine Verwendung erfindungsgemäßer Stahlkorde in der Schutzgürtellage des Gürtelverbandes von Nutzfahrzeugreifen ist mit Vorteilen verbunden. Hier kommen als vorteilhafte Eigenschaften erfindungsgemäßer Stahlkorde vor allem deren gute Flexibilität bei lokaler Beanspruchung, ferner die Korrosionsbeständigkeit, die Ermüdungsbeständigkeit, die Stabilität gegen Verschiebung einzelner Kordbestandteile und die erzielbare gute Haftung zur umgebendem Gummierungsmischung zum Tragen. Bei Schutzgürtellagen ist auch eine engmaschige Abdeckung im Rahmen der Schutzfunktion der Arbeitsgürtellagen von Bedeutung, sodass erfindungsgemäße Stahlkorde in Schutzgürtellagen mit einer Fadendichte von 34 epdm bis 70 epdm, insbesondere 45 epdm bis 65 epdm, eingesetzt werden.

Für sämtliche die erwähnten Anwendungen des erfindungsgemäßen Stahlkordes ist die Konstruktion 0,25 mm + 4x0,40 mm besonders vorteilhaft. Der für die Stahlfilamente eingesetzte Stahl sollte, wie bereits erwähnt, eine Zugfestigkeit von mindestens 2800 N/mm$^2$ aufweisen.

Die Erfindung betrifft ferner einen Fahrzeugluftreifen radialer Bauart mit einem mehrere Gürtellagen aufweisenden Gürtelverband, welcher in zumindest einer Gürtellage einen Stahlkord gemäß einem oder mehreren der Ansprüche 1 bis 9 enthält.

Weitere Merkmale, Vorteile und Einzelheiten der Erfindung werden anhand der Zeichnung, die schematisch Ausführungsbeispiele darstellt, näher beschrieben. Dabei zeigen

Fig. 1 einen Querschnitt durch einen erfindungsgemäß ausgeführten Stahlkord und
Fig. 2 einen Querschnitt durch einen Nutzfahrzeugreifen.

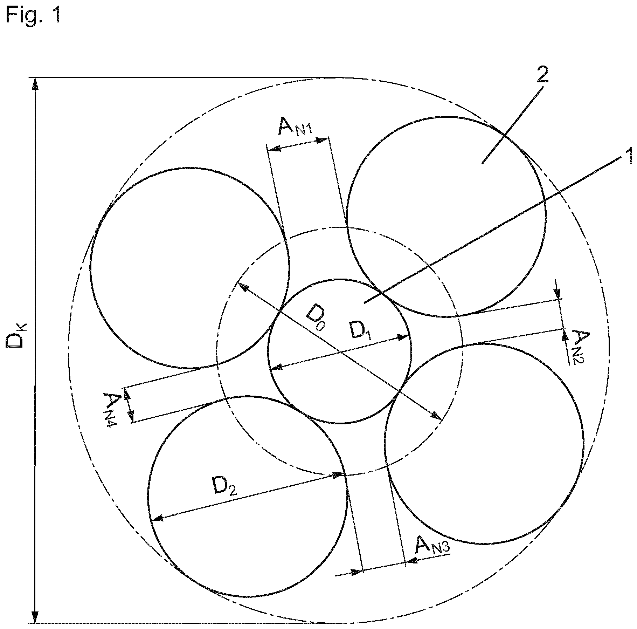

Korde gemäß der gegenständlichen Erfindung sind vom Typ 1+4 und weisen ein Kernfilament 1 und vier mit dessen Außenseite in Kontakt stehende Lagenfilamente 2 auf, wie in Fig. 1 dargestellt. Die Lagenfilamente 2 sind in bekannter Weise gemeinsam um das Kernfilament 1 verdrillt. Die Schlaglänge der Verdrillung der Lagenfilamente 2 beträgt von 10 mm bis 25 mm, vorzugsweise in der Größenordnung von 17,5 mm.

Das Kernfilament 1 und die Lagenfilamente 2 sind Stahlfilamente mit einer Zugfestigkeit von insbesondere mindestens 2800 N/mm$^2$ in einer High-Tensile Ausführung und von bis zu etwa 4000 N/mm$^2$ in Ultra-High-Tensile-Ausführung.

Das Kernfilament 1 und die Lagenfilamente 2 sind nicht vorverformt und können daher im Querschnitt als Kreise betrachtet werden. Das Kernfilament 1 weist einen Durchmesser $D_1$ auf, welcher 0,22 mm bis 0,25 mm beträgt. Die Lagenfilamente 2 weisen sämtlich übereinstimmende Durchmesser $D_2$ auf, welche 0,38 mm bis 0,45 mm, insbesondere 0,40 mm betragen. Die bevorzugte Kordkonstruktion ist daher 0,25+4x0,40. Bezüglich der Durchmesserverhältnisse $D_1 : D_2$ werden die Lagenfilamente 2 und das Kernfilament 1 derart aufeinander abgestimmt, dass der Durchmesser $D_1$ des Kernfilamentes 1 57,5 % bis 67,5 %, insbesondere 62,5 %, des Durchmessers $D_2$ der Lagenfilamente 2 beträgt. Der Korddurchmesser $D_K$ sollte 0,98 mm bis 1,1 mm, insbesondere 1,05 mm, betragen.

Der Stahlkord weist eine offene Konstruktion auf, bei welcher die Lagenfilamente 2 zwar in Kontakt mit dem Kernfilament 1 stehen, jedoch einander im Idealfall nicht berühren. Die Lagenfilamente 2 können daher sämtlich zueinander einen gewissen Abstand aufweisen, es ist jedoch auch möglich, dass einige der vorgesehenen Lagenfilamente 2, beispielsweise zwei Lagenfilamente 2, einander berühren. In Fig. 1 sind die gegenseitigen Abstände $A_{N1}$ bis $A_{N4}$ der Lagenfilamente 2, welche an jenen Stellen ermittelt werden, wo der gegenseitige Abstand der einander benachbart verlaufenden Lagenfilamente 2 am geringsten ist, eingezeichnet. Die gegenseitigen Abstände $A_{N1}$ bis $A_{N4}$ können unterschiedlich groß sein. An den erwähnten Stellen mit dem geringsten gegenseitigen Abstand $A_{N1}$ bis $A_{N4}$ können im Kordquerschnitt gezogene gerade Linien als Sehnen eines Kreises eines Durchmesser $D_0$ betrachtet werden, wobei $D_0$ gemäß nachstehender Gleichung I wie folgt ermittelt wird:

$$\text{Gleichung I: } D_0 = (D_1 + D_2) \times \cos(360°/2N) = (D_1 + D_2) \times \cos(360°/8)$$

mit

$D_1$: Durchmesser des Kernfilamentes,
$D_2$: Durchmesser der Lagenfilamente und
$N=4$.

Der durchschnittliche, als arithmetischer Mittelwert errechnete Abstand $A_{NM}$ der Lagenfilamente 2 lässt sich gemäß Gleichung II ermitteln:

$$\text{Gleichung II: } A_{NM} = \text{avg}(A_{N1}, \dots A_{N4}) = [(D_1 + D_2) \times \sin(360°/8)] - D_2$$

Die Gleichungen I und II gelten zwar exakt lediglich bei einer gleichmäßigen Anordnung der Lagenfilamente 2 um das Kernfilament 1, bei einer ungleichmäßigen Anordnung mit unterschiedlichen gegenseitigen Abständen $A_{N1}$ bis $A_{N4}$, wie in Fig. 1 dargestellt, ergibt sich eine geringfügige Ungenauigkeit, die jedoch unbeachtet bleiben kann.

Eine bestimmte Offenheit O der zweiten Lage, der Lagenfilamente 2, d.h. eine Anordnung möglichst aller Lagenfilamente 2 unter gewissen gegenseitigen Abständen, ist wichtig, um eine gute Penetration des Gummimaterials in die Zwischenräume zwischen den Lagenfilamenten 2 sicherzustellen, um derart das Kernfilament 1 gegen Verschiebung zu fixieren. In diesem Zusammenhang wird eine Offenheit O der Lagenfilamente 2 definiert, die aus Gleichung III ermittelt wird:

$$\text{Gleichung III: } O\ [\%] = N \times A_{NM} / \pi \times D_0 = 4 \times A_{NM} / \pi \times D_0$$

Die Offenheit O sollte bei erfindungsgemäß ausgeführten Stahlkorden zwischen 10 % und 25 % betragen. Liegt die Offenheit O unter 10 % ist keine ausreichende Gummipenetration zwischen die Lagenfilamente 2 möglich, die für eine gute Fixierung des Kernfilamentes 1 erforderlich ist. Es besteht dann die Gefahr einer Verschiebung des Kernfilamentes 1 und es steigt die Anfälligkeit für eine Korrosion des Stahlkordes. Übersteigt die Offenheit 25 % verschlechtert sich die Kordsteifigkeit bezogen auf den Außendurchmesser bei einer gleichen Kordanzahl pro Dezimeter (epdm, "ends per decimeter") in einer Gürtellage. Dadurch verschlechtert sich die Abriebperformance des Laufstreifens des Reifens. Würde man als Gegenmaßnahme die Kordanzahl pro Dezimeter Gürtellage erhöhen, also den Kordabstand verringern, wird die Gürtelhaltbarkeit schlechter.

Stahlkorde gemäß der Erfindung eignen sich hervorragend als Festigkeitsträger in Gürtellagen von Fahrzeugluftreifen radialer Bauart. Gürtellagen bestehen, wie an sich bekannt, jeweils aus einer Vielzahl von zueinander parallel verlaufenden und unter einem bestimmten gegenseitigem Abstand angeordneten Stahlkorden, die in eine Kautschukmischung, die sogenannte Gummierungsmischung, eingebettet sind.

Nachfolgend werden Ausführungsbeispiele besonders vorteilhafte Verwendungen erfindungsgemäßer Stahlkorde näher erläutert.

Einsatz erfindungsgemäßer Stahlkorde in einer Gürtellage von Transporterreifen, Light-Truck-Reifen, Reifen für SUVs und dergleichen:

Eine der möglichen und bevorzugten Verwendungen eines erfindungsgemäßen Stahlkordes ist in einer oder mehreren Gürtellagen von Transporterreifen, Light-Truck-Reifen, Reifen für SUVs und dergleichen. Die in solchen Reifen üblichen Korde der Konstruktion 3x0,20+6x0,35 oder 2+2x0,32 werden durch den erfindungsgemäßen Stahlkord der Konstruktion 1+4, insbesondere der Konstruktion 0,25+4x0,40, ersetzt. In dem genannten Reifensegment - Reifen mit C-Kennzeichnung - steht vor allem eine bessere Lösung des Zielkonfliktes zwischen der Abrieblebensdauer, der Gürtelhaltbarkeit und der Gürtelrobustheit im Vordergrund, wobei auch die Kosten beachtet werden. Besonders vorteilhaft ist eine Anordnung des Kordes gemäß der Erfindung in den Gürtellagen der betreffenden Reifen in einer Fadendichte von 34 epdm bis 55 epdm, insbesondere 40 epdm bis 50 epdm. Die oben erwähnten herkömmlichen Korde werden in einer Fadendichte zwischen 30 epdm und 40 epdm verwendet. Gemäß der Erfindung ausgeführte Gürtellagen haben den Vorteil, dass das gesamte Gürtelpaket durch die höhere Fadendichte eine höhere spezifische Robustheit aufweist. Der erfindungsgemäße Stahlkord weist ferner infolge seiner Kordkonstruktion und seines Kordquerschnittes eine sehr gute Korrosionsbeständigkeit auf. Gegenüber den aus dem Stand der Technik bekannten Stahlkorden weist der erfindungsgemäße Stahlkord auch geringere Kosten auf, insbesondere durch die geringere Filamentanzahl und den größeren Filamentdurchmesser. Der gegenüber den Stahlkorden aus dem Stand der Technik geringere Korddurchmesser bedingt eine geringere Dicke der Gürtelgummierung, wodurch die Kosten ebenfalls reduziert sind.

Einsatz erfindungsgemäßer Stahlkorde in einer Gürtellage von Nutzfahrzeugreifen:

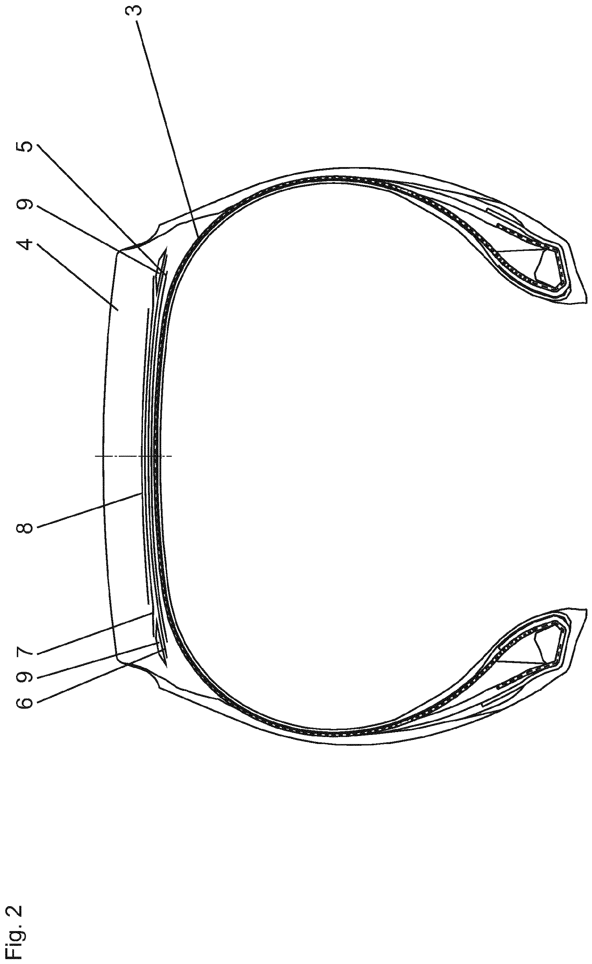

Erfindungsgemäß ausgeführte Stahlkorde können ferner besonders vorteilhaft in den Gürtellagen von Nutzfahrzeugreifen, insbesondere LKW-Reifen und Busreifen, in Radialbauart eingesetzt werden. Fig. 2 zeigt schematisch einen Querschnitt durch einen Nutzfahrzeugreifen mit einer Radialkarkasse 3, einem Laufstreifen 4 und einem Gürtelverband aus vier Gürtellagen 5, 6, 7 und 8. Dargestellt ist ein herkömmlich aufgebauter Gürtelverband mit einer Sperrgürtellage 5 (radial innerste Gürtellage), zwei Arbeitslagen 6 und 7 und einer Schutzlage 8 als radial äußerste Gürtellage. Zwischen den Arbeitslagen 6 und 7 befinden sich randseitig Gürtelkantenpolster 9. Die Breiten der Gürtellagen 5, 6, ,7 und 8 entsprechen den üblichen Breiten, wobei die Sperrgürtellage 5 und die Arbeitslage 7 im Wesentlichen übereinstimmende Breiten aufweisen, die zweite Gürtellage 6, die ebenfalls eine Arbeitslage ist, die breiteste Gürtellage ist und wobei die Schutzlage 8 die geringste Breite von allen Gürtellagen aufweist. Die Stahlkorde in den einzelnen Gürtellagen können unter den üblichen Winkeln zur Umfangsrichtung des Reifens verlaufen. So können beispielsweise in den Arbeitsgürtellagen die Stahlkorde zueinander gekreuzt und unter Winkeln von 12° bis 36 ° zur Umfangsrichtung verlaufen. In der Sperrgürtellage beträgt der Winkel der Stahlkorde zur Umfangsrichtung üblicherweise zwischen 40 ° und 90 °. In der Schutzlage ist eine Anordnung der Stahlkorde unter einem Winkel von 12 ° bis 36 ° üblich. Abweichend von der dargestellten Ausführung kann der Gürtelverband von Nutzfahrzeugreifen lediglich drei Gürtellagen, nämlich entweder eine Sperrgürtellage und zwei Arbeitsgürtellagen oder zwei Arbeitslagen und eine Schutzlage, aufweisen. Möglich sind auch Ausführungen, bei denen zwei Sperrgürtellagen im Gürtelverband vorgesehen sind.

Einsatz erfindungsgemäßer Stahlkorde in einer Sperrgürtellage:

Zu den wesentlichen Anforderungen an eine Sperrgürtellage im Gürtelverband von Nutzfahrzeugreifen gehört das Bereitstellen einer hohen Steifigkeit für eine Sperrwirkung gegen eine etwaige Breitenänderung der Arbeitsgürtellagen, wobei eine hohe Steifigkeit für das Einstellen einer flachen Lauffläche in der Außenkontur, ein günstiges Laufflächenabriebverhalten sowie einen geringen Rollwiderstand wichtig ist. Von Bedeutung ist auch eine hohe Festigkeit und damit Widerstandfähigkeit, um beispielsweise Kordbrüche beim Überfahren von Unebenheiten und beim Eindringen von Fremdkörpern in und durch die Lauffläche zu vermeiden, ferner eine hohe Ermüdungsbeständigkeit der Stahlkorde, insbesondere auch unter wechselnden Kordlasten, zur Vermeidung von Kordbrüchen infolge Wechselbelastung und Spitzenlasten. Wesentlich sind ferner auch eine Stabilität gegen Verschiebung der Kordfilamente, ferner die Haftung zur Gummierungsmischung und schließlich die Kosten. Durch den Einsatz eines erfindungsgemäßen Stahlkordes in der Sperrgürtellage werden diese Anforderungen, insbesondere bezüglich der Steifigkeit und der Festigkeit, erfüllt. Insbesondere durch den kompakten Kordaufbau erfindungsgemäßer Stahlkorde wird eine hohe Kordsteifigkeit erzielt, darüber hinaus weist ein kompakter Kordaufbau auch Vorteile hinsichtlich des Kompressionsverhaltens und der Stabilität gegen Verschiebung einzelner Kordbestandteile auf. Für eine gute Steifigkeit und Festigkeit ist auch das Kordvolumen maßgeblich, wobei es für eine gegebene bzw. gewünschte Steifigkeit und Festigkeit auch aus Kostengründen günstiger ist, dünnere Stahlkorde mit einer höheren Fadendichte zu verwenden. So ist es beispielsweise üblich, in der Sperrgürtellage von Nutzfahrzeugreifen Korde der Konstruktion 1+5×0,40 mit Fadendichten von 30 epdm bis 44 epdm zu verwenden. Erfindungsgemäße Stahlkorde der Konstruktion 1+4, insbesondere der Konstruktion 0,25+4x0,40, werden in Sperrgürtellagen insbesondere in einer Fadendichte von 40 epdm bis 70 epdm, vorzugsweise 50 epdm bis 65 epdm, eingesetzt. Um eine möglichst hohe Festigkeit sicherzustellen, ist es dabei vorteilhaft, High-Tensile oder Super-High-Tensile Stahlkorde zu verwenden. Die Verwendung des erfindungsgemäßen Stahlkordes in der Sperrgürtellage erhöht die Robustheit des gesamten Gürtelpaketes. Darüber hinaus sind auch die Kosten durch den geringeren Korddurchmesser und die geringere erforderliche Dicke der Gummierung der Sperrgürtellage gegenüber der Verwendung bekannter Konstruktionen reduziert.

Einsatz erfindungsgemäßer Stahlkorde in einer Arbeitsgürtellage:

Auch in den Arbeitsgürtellagen von Nutzfahrzeugreifen lassen sich erfindungsgemäße Stahlkorde vorteilhaft einsetzen. Von den Anforderungen her ist bei dieser Verwendung vor allem der Einfluss des Stahlkordes auf die Abrieblebensdauer, die Gürtelkantenhaltbarkeit und die Gürtelrobustheit von Bedeutung. Erfindungsgemäße Stahlkorde werden in Arbeitsgürtellagen beispielsweise anstelle der üblichen Korde der Konstruktion 1+5×0,40, die mit Fadendichten von 34 epdm oder 41 epdm eingesetzt werden, verwendet. Erfindungsgemäße Stahlkorde werden in den Arbeitsgürtellagen mit Fadendichten von 40 epdm bis 60 epdm, insbesondere 45 epdm bis 55 epdm, verwendet und verleihen dem Gürtelpaket eine hohe Robustheit und zu den bekannten Korden vergleichbare Eigenschaften hinsichtlich Abrieblebensdauer und Korrosionsbeständigkeit. Auch bei diesem Einsatzzweck ist der Kostenvorteil, wie oben erwähnt, von Bedeutung.

Einsatz erfindungsgemäßer Stahlkorde in einer Schutzgürtellage:

Es ist üblich, in Gürtelverbänden von Nutzfahrzeugreifen radial außerhalb der Arbeitsgürtellagen eine Schutzgürtellage vorzusehen, die die Arbeitslagen vor Beschädigungen schützen soll, die beispielsweise durch Laufflächenverletzungen, eindringende Steine und dergleichen verursacht werden können. Die Schutzgürtellage bzw. ihre Gürtelkorde soll bzw. sollen eine gute Flexibilität bei lokaler Beanspruchung, die bereits erwähnte Schutzfunktion für die Arbeitsgürtellagen, Korrosionsbeständigkeit, Ermüdungsbeständigkeit, Stabilität gegen Verschiebung einzelner Kordbestandteile und eine gute Haftung zur umgebenden Gummierungsmischung aufweisen. Besonders wichtig sind eine "engmaschige Abdeckung" im Rahmen der Schutzfunktion, Schnittbeständigkeit, aber auch Kosteneffizienz. Eine engmaschige Abdeckung wird insbesondere durch eine hohe Korddichte erreicht, für eine hohe Schnittbeständigkeit ist ein gewisser Filamentdurchmesser von Vorteil. Diesen Anforderungen und Zielen werden Schutzgürtellagen mit einem erfindungsgemäßen Stahlkord gerecht, insbesondere solche, mit erfindungsgemäßen Stahlkorden der Konstruktion 0,25+4x0,40, vorteilhafterweise in einer High-Tensile-Ausführung (mindestens 2800 N/mm$^2$). Für eine engmaschige Abdeckung ist es vorteilhaft, wenn in der Schutzgürtellage die erfindungsgemäßen Stahlkorde in einer entsprechenden Fadendichte, insbesondere von 34 epdm bis 70 epdm, vorzugsweise 45 epdm bis 65 epdm, verwendet werden. Der Einsatz des erfindungsgemäßen Stahlkordes in der Schutzgürtellage ist aus den bereits beschriebenen Gründen ebenfalls mit einem Kostenvorteil verbunden.

**Bezugsziffernliste**

| 1 | Kernfilament |
|---|---|
| 2 | Lagenfilament |
| 3 | Radialkarkas se |
| 4 | Laufstreifen |
| 5 | Gürtellage |
| 6 | Gürtellage |
| 7 | Gürtellage |
| 8 | Gürtellage |
| 9 | Gürtelkantenpolster |
| $A_{N1}$ | Abstand |
| $A_{N2}$ | Abstand |
| $A_{N3}$ | Abstand |
| $A_{N4}$ | Abstand |
| $D_0$ | Durchmesser |
| $D_1$ | Durchmesser |
| $D_2$ | Durchmesser |
| $D_K$ | Korddurchmesser |

O     Offenheit

**Patentansprüche**

1. Stahlkord der Konstruktion 1+4, welcher ein offener Stahlkord ist, zur Verwendung als Festigkeitsträger in einer Gürtellage eines Fahrzeugluftreifens, mit einem einzigen Kernfilament (1) und mit Lagenfilamenten (2), welche sämtlich das Kernfilament (1) außen berühren und gleiche Durchmesser ($D_2$) von 0,38 mm bis 0,45 mm aufweisen, **dadurch gekennzeichnet,** **dass** das Kernfilament (1) einen Durchmesser ($D_1$) von 0,22 mm bis 0,25 mm aufweist.

2. Stahlkord nach Anspruch 1, **dadurch gekennzeichnet, dass** der Korddurchmesser ($D_K$) zwischen 0,98 mm und 1,1 mm beträgt.

3. Stahlkord nach Anspruch 1 oder 2, **dadurch gekennzeichnet, dass** der Durchmesser ($D_1$) des Kernfilamentes (1) 57,5 % bis 67,5 %, insbesondere 62,5 %, des Durchmessers ($D_2$) der Lagenfilamente (2) beträgt.

4. Stahlkord nach einem der Ansprüche 1 bis 3, **dadurch gekennzeichnet, dass** der Durchmesser ($D_1$) des Kernfilamentes (1) 0,25 mm beträgt.

5. Stahlkord nach einem der Ansprüche 1 bis 4, **dadurch gekennzeichnet, dass** der Durchmesser ($D_2$) der Lagenfilamente (2) 0,40 mm beträgt.

6. Stahlkord nach einem der Ansprüche 1 bis 5, **dadurch gekennzeichnet, dass** die Offenheit (O) der Lagenfilamente (2) gemäß

$$\text{Gleichung III: } O\ [\%] = 4 \times A_{NM} / \pi \times D_0$$

ermittelt wird und von 10 % bis 25 % beträgt, wobei $A_{NM}$ der arithmetische Mittelwert der kleinsten gegenseitigen Abstände der Lagenfilamente (2) und wobei $D_0$ der Durchmesser jenes Kreises ist, in welchem die kleinsten gegenseitigen Abstände Sehnen bilden.

7. Stahlkord nach Anspruch 6, **dadurch gekennzeichnet, dass** der Durchmesser ($D_0$) des Kreises, in welchem die kleinsten gegenseitigen Abstände Sehnen bilden, gemäß

$$\text{Gleichung I: } D_0 = (D_1 + D_2) \times \cos(360°/8)$$

ermittelt wird.

8. Stahlkord nach einem der Ansprüche 1 bis 7, **dadurch gekennzeichnet, dass** die Stahlfilamente (1,2) eine Zugfestigkeit von mindestens 2800 N/mm$^2$ aufweisen.

9. Stahlkord nach einem der Ansprüche 1 bis 8, **dadurch gekennzeichnet, dass** die Schlaglänge der Verdrillung der Lagenfilamente (2) um das Kernfilament (1) von 10 mm bis 25 mm, insbesondere 17,5 mm, beträgt.

10. Fahrzeugluftreifen radialer Bauart mit einem mehrere Gürtellagen aufweisenden Gürtelverband, welcher in zumindest einer Gürtellage als Gürtelkord einen Stahlkord gemäß einem oder mehreren der Ansprüche 1 bis 9 enthält.

11. Fahrzeugluftreifen nach Anspruch 10, welcher ein Reifen mit C-Kennzeichnung, insbesondere ein Transporterreifen, ein Light-Truck-Reifen oder ein Reifens für SUVs ist.

12. Fahrzeugluftreifen nach Anspruch 10, **dadurch gekennzeichnet, dass** die Fadendichte der Gürtelkorde 34 epdm bis 55 epdm, insbesondere 40 epdm bis 50 epdm, beträgt.

**13.** Fahrzeugluftreifen nach Anspruch 10, welcher ein LKW- oder Busreifen ist.

**14.** Fahrzeugluftreifen nach Anspruch 10 oder 13, **dadurch gekennzeichnet, dass** der Stahlkord der Gürtelkord in einer Sperrgürtellage (5) ist.

**15.** Fahrzeugluftreifen nach Anspruch 14, **dadurch gekennzeichnet, dass** die Fadendichte der Gürtelkorde in der Sperrgürtellage (5) 40 epdm bis 70 epdm, insbesondere 50 epdm bis 65 epdm, beträgt.

**16.** Fahrzeugluftreifen nach Anspruch 10 oder 13, **dadurch gekennzeichnet, dass** der Stahlkord der Gürtelkord in zumindest einer Arbeitsgürtellage (6, 7) ist.

**17.** Fahrzeugluftreifen nach Anspruch 16, **dadurch gekennzeichnet, dass** die Fadendichte der Gürtelkorde in der Arbeitsgürtellage (6, 7) 40 epdm bis 60 epdm, insbesondere 45 epdm bis 55 epdm, beträgt.

**18.** Fahrzeugluftreifen nach Anspruch 10 oder 13, **dadurch gekennzeichnet, dass** der Stahlkord der Gürtelkord in einer Schutzgürtellage (8) ist.

**19.** Fahrzeugluftreifen nach Anspruch 16, **dadurch gekennzeichnet, dass** die Fadendichte der Gürtelkorde in der Schutzgürtellage (8) 34 epdm bis 70 epdm, insbesondere 45 epdm bis 65 epdm, beträgt.

**20.** Fahrzeugluftreifen nach einem der Ansprüche 10 bis 19, **dadurch gekennzeichnet, dass** der Gürtelkord die Konstruktion 0,25 mm + 4x0,40 mm aufweist.

**21.** Fahrzeugluftreifen nach einem der Ansprüche 10 bis 20, **dadurch gekennzeichnet, dass** die Stahlfilamente (1, 2) des Gürtelkordes eine Zugfestigkeit von mindestens 2800 N/mm$^2$ aufweisen.

**Claims**

**1.** Steel cord of the construction 1+4, which is an open steel cord, for use as a reinforcing support in a belt ply of a pneumatic vehicle tyre, with a single cord filament (1) and with ply filaments (2), all of which touch the core filament (1) on the outside and have the same diameter ($D_2$) of 0.38 mm to 0.45 mm, **characterized in that** the core filament (1) has a diameter ($D_1$) of 0.22 mm to 0.25 mm.

**2.** Steel cord according to Claim 1, **characterized in that** the cord diameter ($D_K$) is between 0.98 mm and 1.1 mm.

**3.** Steel cord according to Claim 1 or 2, **characterized in that** the diameter ($D_1$) of the core filament (1) is 57.5% to 67.5%, in particular 62.5%, of the diameter ($D_2$) of the ply filaments (2).

**4.** Steel cord according to one of Claims 1 to 3, **characterized in that** the diameter ($D_1$) of the core filament (1) is 0.25 mm.

**5.** Steel cord according to one of Claims 1 to 4, **characterized in that** the diameter ($D_2$) of the ply filaments (2) is 0.40 mm.

**6.** Steel cord according to one of Claims 1 to 5, **characterized in that** the openness (O) of the ply filaments (2) is determined according to

$$\text{equation III: } O[\%] = 4 \times A_{NM} / \pi \times D_0$$

and is from 10% to 25%, where $A_{NM}$ is the arithmetic mean of the smallest mutual spacings of the ply filaments (2) and where $D_0$ is the diameter of that circle in which the smallest mutual spacings form chords.

**7.** Steel cord according to Claim 6, **characterized in that** the diameter ($D_0$) of the circle in which the smallest mutual spacings form chords is determined according to

$$\text{equation I: } D_0 = (D_1 + D_2) \times \cos(360°/8).$$

8. Steel cord according to one of Claims 1 to 7, **characterized in that** the steel filaments (1, 2) have a tensile strength of at least 2800 N/mm$^2$.

9. Steel cord according to one of Claims 1 to 8, **characterized in that** the length of lay of the twisting of the ply filaments (2) around the core filament (1) is from 10 mm to 25 mm, in particular 17.5 mm.

10. Pneumatic vehicle tyre of a radial type of construction with a breaker belt assembly comprising a number of belt plies, which contains a steel cord according to one or more of Claims 1 to 9 as a belt cord in at least one belt ply.

11. Pneumatic vehicle tyre according to Claim 10, which is a tyre with a C classification, in particular a transporter tyre, a light truck tyre, or a tyre for SUVs.

12. Pneumatic vehicle tyre according to Claim 10, **characterized in that** the filament density of the belt cords is 34 epdm to 55 epdm, in particular 40 epdm to 50 epdm.

13. Pneumatic vehicle tyre according to Claim 10, which is a truck or bus tyre.

14. Pneumatic vehicle tyre according to Claim 10 or 13, **characterized in that** the steel cord is the belt cord in a barrier belt ply (5).

15. Pneumatic vehicle tyre according to Claim 14, **characterized in that** the filament density of the belt cords in the barrier belt ply (5) is 40 epdm to 70 epdm, in particular 50 epdm to 65 epdm.

16. Pneumatic vehicle tyre according to Claim 10 or 13, **characterized in that** the steel cord is the belt cord in at least one working belt ply (6, 7).

17. Pneumatic vehicle tyre according to Claim 16, **characterized in that** the filament density of the belt cords in the working belt ply (6, 7) is 40 epdm to 60 epdm, in particular 45 epdm to 55 epdm.

18. Pneumatic vehicle tyre according to Claim 10 or 13, **characterized in that** the steel cord is the belt cord in a protective belt ply (8).

19. Pneumatic vehicle tyre according to Claim 16, **characterized in that** the filament density of the belt cords in the protective belt ply (8) is 34 epdm to 70 epdm, in particular 45 epdm to 65 epdm.

20. Pneumatic vehicle tyre according to one of Claims 10 to 19, **characterized in that** the belt cord has the construction 0.25 mm + 4×0.40 mm.

21. Pneumatic vehicle tyre according to one of Claims 10 to 20, **characterized in that** the steel filaments (1, 2) of the belt cord have a tensile strength of at least 2800 N/mm$^2$.


**Revendications**

1. Câble d'acier de structure 1+4, à savoir câble d'acier ouvert, destiné à être utilisé comme renfort dans la couche de ceinture d'un bandage pneumatique pour roue pour véhicule et présentant un seul filament d'âme (1) et des filaments de couche (2) qui sont tous en contact avec le filament d'âme (1) par l'extérieur et présentent un même diamètre ($D_2$) de 0,38 mm à 0,45 mm,
**caractérisé en ce que**
le filament d'âme (1) présente un diamètre ($D_1$) de 0,22 mm à 0,25 mm.

2. Câble d'acier selon la revendication 1, **caractérisé en ce que** le diamètre ($D_K$) du câble est compris entre 0,98 mm et 1,1 mm.

3. Câble d'acier selon les revendications 1 ou 2, **caractérisé en ce que** le diamètre ($D_1$) du filament d'âme (1) représente 57,5 % à 67,5 % et en particulier 62,5 % du diamètre ($D_2$) des filaments de couche (2).

4. Câble d'acier selon l'une des revendications 1 à 3, **caractérisé en ce que** le diamètre ($D_1$) du filament d'âme (1) est de 0,25 mm.

5. Câble d'acier 1 à 4, **caractérisé en ce que** les diamètres ($D_2$) des filaments de couche (2) est de 0,40 mm.

6. Câble d'acier selon l'une des revendications 1 à 5, **caractérisé en ce que** l'ouverture (O) des filaments de couche (2) est déterminée par l'équation III :

$$O[\%] = 4 \ x \ A_{NM}/\pi \ x \ D_0$$

et représente de 10 % à 25 %, $A_{NM}$ étant la valeur moyenne arithmétique des plus petites distances mutuelles entre les filaments de couche (2) et $D_0$ étant le diamètre du cercle dans lequel se trouvent les cordes qui ont les plus petites distances mutuelles.

7. Câble d'acier selon la revendication 6, **caractérisé en ce que** le diamètre ($D_0$) du cercle dans lequel les cordes forment les plus petites distances mutuelles est déterminé selon l'équation I :

$$D_0 = (D_1 + D_2) \ x \ \cos(360°/8).$$

8. Câble d'acier selon l'une des revendications 1 à 7, **caractérisé en ce que** les filaments d'acier (1, 2) ont une résistance à la traction d'au moins 2800 N/mm$^2$.

9. Câble d'acier selon l'une des revendications 1 à 8, **caractérisé en ce que** la longueur de rabat de la torsion des filaments de couche (2) autour du filament d'âme (1) est comprise entre 10 mm et 25 mm et en particulier est de 17,5 mm.

10. Bandage pneumatique pour roue de véhicule à structure radiale et présentant un ensemble de ceinture qui présente une ou plusieurs couches de ceinture et qui contient comme câble de ceinture d'au moins une couche de ceinture un câble d'acier selon l'une ou plusieurs des revendications 1 à 9.

11. Bandage pneumatique pour roue de véhicule selon la revendication 10, qui est un bandage portant la caractéristique C, en particulier un bandage pour transporteur, un bandage pour camion léger ou un bandage pour SUV.

12. Bandage pneumatique pour roue de véhicule selon la revendication 10, **caractérisé en ce que** la densité de fil des câbles de ceinture est de 34 epdm à 55 epdm et en particulier de 40 epdm à 50 epdm.

13. Bandage pneumatique pour roue de véhicule selon la revendication 10, qui est un bandage de camion ou d'autobus.

14. Bandage pneumatique pour roue de véhicule selon les revendications 10 ou 13, **caractérisé en ce que** le câble d'acier est le câble d'acier d'une couche (5) de ceinture de blocage.

15. Bandage pneumatique pour roue de véhicule selon la revendication 14, **caractérisé en ce que** la densité de fil des câbles de ceinture de la couche (5) de ceinture de blocage est de 40 epdm à 70 epdm et en particulier de 50 epdm à 65 epdm.

16. Bandage pneumatique pour roue de véhicule selon les revendications 10 ou 13, **caractérisé en ce que** le câble d'acier est le câble de ceinture d'au moins une couche de travail (6, 7) de ceinture.

17. Bandage pneumatique pour roue de véhicule selon la revendication 16, **caractérisé en ce que** la densité de fil des câbles de ceinture de la couche (6, 7) de ceinture de travail est de 40 epdm à 60 epdm et en particulier de 45 epdm à 55 epdm.

18. Bandage pneumatique pour roue de véhicule selon les revendications 10 ou 13, **caractérisé en ce que** le câble d'acier est le câble d'acier d'une couche (8) de ceinture de protection.

19. Bandage pneumatique pour roue de véhicule selon la revendication 16, **caractérisé en ce que** la densité de fil des câbles de ceinture de la couche (8) de ceinture de protection est de 34 epdm à 70 epdm et en particulier de 45 epdm à 65 epdm.

20. Bandage pneumatique pour roue de véhicule selon l'une des revendications 10 à 19, **caractérisé en ce que** le câble de ceinture présente la structure 0,25 mm + 4x0,40 mm.

21. Bandage pneumatique pour roue de véhicule selon l'une des revendications 10 à 20, **caractérisé en ce que** les filaments d'acier (1, 2) du câble de ceinture présentent une résistance à la traction d'au moins 2800 N/mm$^2$.

Fig. 1

Fig. 2

**IN DER BESCHREIBUNG AUFGEFÜHRTE DOKUMENTE**

**In der Beschreibung aufgeführte Patentdokumente**

- DE 102010036809 A
- JP 2012076672 A
- DE 3006488 A1
- JP 60038208 A